# EUROPÄISCHE PATENTSCHRIFT

(11) **EP 2 499 630 B1**
(45) Veröffentlichungstag und Bekanntmachung des Hinweises auf die Patenterteilung: **06.03.2013**
(21) Anmeldenummer: 10778854.9
(22) Anmeldetag: 25.10.2010
(51) Int. Cl.: G09F 9/37, G09F 13/24, G02B 26/00

(54) **DISPLAY**
DISPLAY
DISPOSITIF D'AFFICHAGE

(30) Priorität: 09.11.2009 DE 102009052271
(43) Veröffentlichungstag der Anmeldung: 19.09.2012
(73) Patentinhaber: ASPRE AG, 9050 Appenzell (CH)
(72) Erfinder: SACHER, Friedrich-Josef, 53842 Troisdorf (DE)
(74) Vertreter: Freischem, Stephan
(86) Internationale Anmeldenummer: PCT/EP2010/006500
(87) Internationale Veröffentlichungsnummer: WO 2011/054456

(56) Entgegenhaltungen:
- EP-A1- 1 090 384
- EP-A1- 1 529 274
- DE-A1-102006 009 541
- DE-A1-102006 050 404

## Beschreibung

Die Erfindung bezieht sich auf ein Display mit einer Bildfläche gemäß dem Oberbegriff des Anspruchs 1 oder 2.

Displays dieser Art sind bekannt aus der EP 1 529 274 und der EP 1 090 384. Bei diesen bekannten Displays dienen als Stellantriebe Piezoaktoren, welche die beweglichen Wände nach Art einer Mikropumpe bewegen und dadurch Farbflüssigkeit in die Farbspiegel drücken oder aber ein klar durchsichtiges und farbloses Fluid in die Farbspiegel bewegen. Als Stellantriebe können auch Magnete dienen. Die bekannten Displays haben den Nachteil, dass ihre Stellantriebe während einer Aktivierung nicht oder nur sehr schwer steuerbar sind und deshalb nicht geeignet sind, die Farbspiegel zur Hälfte, zu einem Drittel, zu einem Viertel oder zu einem anderen Bruchteil mit Farbflüssigkeit zu füllen. Die teilweise Füllung der Farbspiegel mit Farbflüssigkeiten der Farben Rot, Grün, Blau oder Cyan, Magenta, Yellow ist notwendig, um möglichst viele und fein abgestufte Farbtöne der Pixel zu erreichen.

Es ist ferner bekannt, den Transport der Farbflüssigkeit vom Farbbehälter in den Farbspiegel und aus dem Farbspiegel in den Farbbehälter mittels der sogenannten Elektrobenetzungs- oder Elektrowetting-Technik zu erreichen. Dabei müssen auf die durchsichtige Wand mehrere Schichten aufgebracht werden, insbesondere eine Elektrodenschicht und eine Isolierschicht. Üblicherweise wird mit der Elektrowetting-Technik eine Fluidschicht bewegt, die sich aus zwei nicht miteinander mischbaren Flüssigkeiten zusammensetzt, z. B. eine ölige Farbflüssigkeit und farbloses Wasser, sodass in die Farbspiegel eines Pixels eine klar durchsichtige farblose Flüssigkeit oder eine Farbflüssigkeit transportiert wird.

Diese Elektroden und Schichten werden als hauchdünne, durchsichtige Schichten aufgetragen, trotzdem behindern diese Schichten den Lichtdurchgang, weil Lichtstrahlen an den Kanten dieser Schichten abgelenkt und gebrochen werden. Es entsteht partielle ein Streulicht, so dass die Lichtdurchlässigkeit der zur Schaffung der erforderlichen Elektroden beschichteten Wände der Farbspiegel optisch nicht rein ist. Störend ist dies insbesondere dann, wenn drei oder vier Farbspiegel eines Pixels hintereinander angeordnet sind. Auch ist die teilweise Befüllung der Farbspiegel mit Farbflüssigkeit mittels der Elektrowetting-Technik nur mit großem Aufwand und nicht mit der erwünschten Schnelligkeit möglich.

Der Erfindung liegt die Aufgabe zu Grunde, einen Stellantrieb für eine Mikropumpe bzw. die bewegliche Wand des Farbreservoirs zuschaffen, die so gesteuert werden kann, dass auch genaue Zwischenstellungen möglich sind.

Ausgehend von einem Display der eingangs beschriebenen Art wird diese Aufgabe erfindungsgemäß dadurch gelöst, dass die vom Farbspiegel abgewandte Wand des Farbbehälters zumindest teilweise die bewegliche Wand bildet und die bewegliche Wand über eine im spitzen Winkel zur Ebene des Farbbehälters verlaufende Fläche auf das Stellglied roder einem damit verbundenen Teil abgestützt ist und dadurch die Bewegung des Stellgliedes in eine rechtwinklig dazu verlaufende und verkürzte Hub- oder Absenkbewegung der beweglichen Wand umgesetzt wird.

Diese im spitzen Winkel zur Ebene des Farbbehälters und damit auch zur beweglichen Wand verlaufende Fläche kann unmittelbar oder mittelbar über einen Hubteller mit der beweglichen Wand verbunden sein und das Stellglied kann als ein zapfenförmiger Vorsprung ausgebildet sein, dessen der Gleitfläche zugewandtes Ende bei Verstellen des Stellgliedes an der Gleitfläche entlang gleitet und damit die bewegliche Wand des Farbbehälters tiefer in den Farbbehälter hineindrückt und damit Farbe in den Farbspiegel drückt. Bewegt sich das Stellglied in die entgegengesetzte Richtung, dann wird die bewegliche Wand von einer Rückstellfeder zurückgedrückt. Dadurch vergrößert sich das Volumen im Farbbehälter, so dass Farbflüssigkeit aus dem Farbspiegel abgesogen wird. Die Farbflüssigkeit kann auch von einer komprimierten Luft- oder Gasblase in den Farbbehälter zurückgedrückt werden oder aber auch elektromagnetisch.

In kinematischer Umkehrung kann auch das die Verstellung der beweglichen Wand des Farbbehälters bewirkende Stellglied, oder ein mit diesem Stellglied verbundenes Teil, auf den oder das sich die Wand abstützt, entlang einer im spitzen Winkel zur Ebene des Farbbehälters verlaufenden Bahn bewegt werden, so dass diese Bewegung des Stellglieds in eine rechtwinklig zur Ebene des Farbbehälters verlaufende und verkürzte Hub- oder Absenkbewegung der beweglichen Wand umgesetzt wird.

Für den Antrieb des Stellgliedes sind alle Mikrolinearantriebe geeignet, deren Stellglied auf kleinste Schritte genau positionierbar ist und mit ausreichender Kraft und Geschwindigkeit die bewegliche Wand des Farbbehälters in die programmierte Stellung bringen kann, so insbesondere Piezolinearmotore, Piezolinearaktore und Ultraschallmotore.

In vorteilhafter Weise ist das Stellglied des Linearantriebes mit einem Schlitten verbunden, auf dem sich die bewegliche Wand des Farbbehälters abstützt und der eine zur Ebene des Farbbehälters parallele Gleitfläche und eine spitzwinklig dazu verlaufende Gleitfläche aufweist. Dieser Schlitten ist zwischen der parallel zur Ebene des Farbbehälters verlaufenden Ebene und der im spitzen Winkel dazu verlaufenden Fläche angeordnet und bewirkt eine bessere Verteilung der Kräfte und reduziert die von der Führung der beweglichen Wand des Farbbehälters aufzunehmenden Kraftmomente.

Falls die Verstellkraft eines Mikrolinearantriebes nicht ausreicht, können zwei Antriebe vorgesehen sein, deren Stellglieder gegenläufig auf die Enden einer sich drehenden Brücke einwirken, die sich bei Drehung um weniger als 180° um den maximalen Hub der beweglichen Wand hebt oder senkt.

In der folgenden Beschreibung werden Ausführungsbeispiele der Erfindung unter Bezugnahme auf die Zeichnungen näher beschrieben. Die Zeichnungen zeigen in
Fig. 1 eine Schnittansicht eines Pixels, dessen Farbspiegel farblos ist,
Fig. 2 eine Schnittansicht eines Pixels, dessen Farbspiegel mit Farbflüssigkeit gefüllt ist,
Fig. 3 eine Schnittansicht eines Pixels mit Hubteller zwischen der beweglichen Wand des Farbbehälters und des Stellantriebes, dessen Farbspiegel farblos ist,
Fig. 4 eine Schnittansicht eines Pixels entsprechend Fig. 3, dessen Farbspiegel mit Farbflüssigkeit gefüllt ist
Fig. 5 eine Draufsicht auf einen Stellantrieb mit zwei Mikrolinearantrieben und zwei schrägen Flächen,
Fig. 6 eine Schnittansicht eines Pixels in einer Stellung des Stellantriebes gemäß Fig. 5 und farblosem Farbspiegel,
Fig. 7 eine Draufsicht auf einen Stellantrieb gemäß Fig. 5, jedoch in einer Stellung: voll gefüllt,
Fig. 8 eine Schnittansicht eines Pixels entsprechend Fig. 6 mit einem mit Farbflüssigkeit vollgefüllten Farbspiegel
Fig. 9 eine Draufsicht auf einen Stellantrieb gemäß Fig. 5 in einer Stellung, in welcher der Farbspiegel mit Farbflüssigkeit halb gefüllt ist,
Fig. 10 eine Schnittansicht des Pixels entsprechend Fig. 6 mit einem Farbspiegel, der mit Farbflüssigkeit halb gefüllt ist.

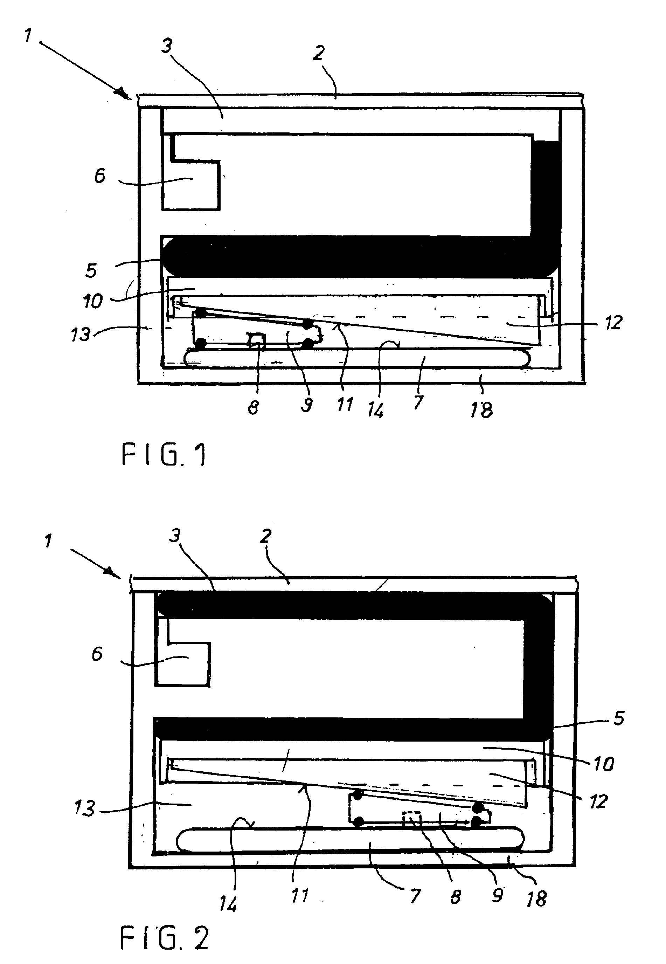

Die Figuren 1 und 2 zeigen ein Pixel 1, dessen Farbspiegel 3 von einem flachen Behälter gebildet ist, der auf der Sichtseite eine klar durchsichtige Wand 2 aufweist. Sind mehrere Farbspiegel 3 hintereinander angeordnet, dann müssen beide parallel zur Bildfläche verlaufende Wände der vorderen Farbspiegel 3 klar durchsichtig sein. Der Innenraum des Farbspiegels 3 ist über einen Kanal mit einem Farbbehälter 5 verbunden, der eine bewegliche Wand 10 aufweist, mit welcher der Inhalt des Farbbehälters 5 so unter Druck gesetzt werden kann, dass aus dem Farbbehälter 5 Farbflüssigkeit in den Farbspiegel 3 gelangt. In Fig. 1 befindet sich im Farbspiegel 3 Luft, Gas oder eine farblose Flüssigkeit, während die Farbflüssigkeit sich im Farbbehälter 5 und im Kanal 4 befindet.

Der Transport der Farbflüssigkeit vom Farbbehälter 5 in den Farbspiegel 3 und von dort zurück in den Farbbehälter 5 wird von einem elektronisch gesteuerten Stellantrieb bewirkt, der einen Mikrolinearantrieb 7 aufweist, dessen die Verstellung der beweglichen Wand 10 bewirkendes Stellglied 8 bei Aktivierung des Linearantriebs 7 unmittelbar oder mittelbar über einen Schlitten 9 an einer mit der beweglichen Wand 10 verbundenen und im spitzen Winkel zur Ebene des Farbbehälters 5 verlaufenden Fläche 11 entlang gleitet. In Fig. 1 steht das Stellglied 8 in der linken Ausgangsposition. Bei Aktivierung des Linearantriebs 7 bewegt sich das Stellglied 8 nach rechts, wodurch Farbflüssigkeit in den Farbspiegel 3 gedrückt wird. Dabei wird die im rarbspiegel 3 befindliche Luft in den Gasraum 6 gedrückt und verdichtet. Wird der Mitnehmer 8 vom Linearmotor 7 von rechts nach links bewegt, dann drückt die verdichtete Luft die im Farbspiegel 3 befindliche Farbflüssigkeit zurück in den Farbbehälter 5. Die bewegliche Wand 10 des Farbbehälters 5 kann aber auch über Rückstellfedern in die Ausgangsposition zurückgestellt werden, so dass in Farbbehälter 5 ein Unterdruck und damit ein Sog entsteht, der die Farbflüssigkeit zurück in den Farbbehälter 5 bewegt.

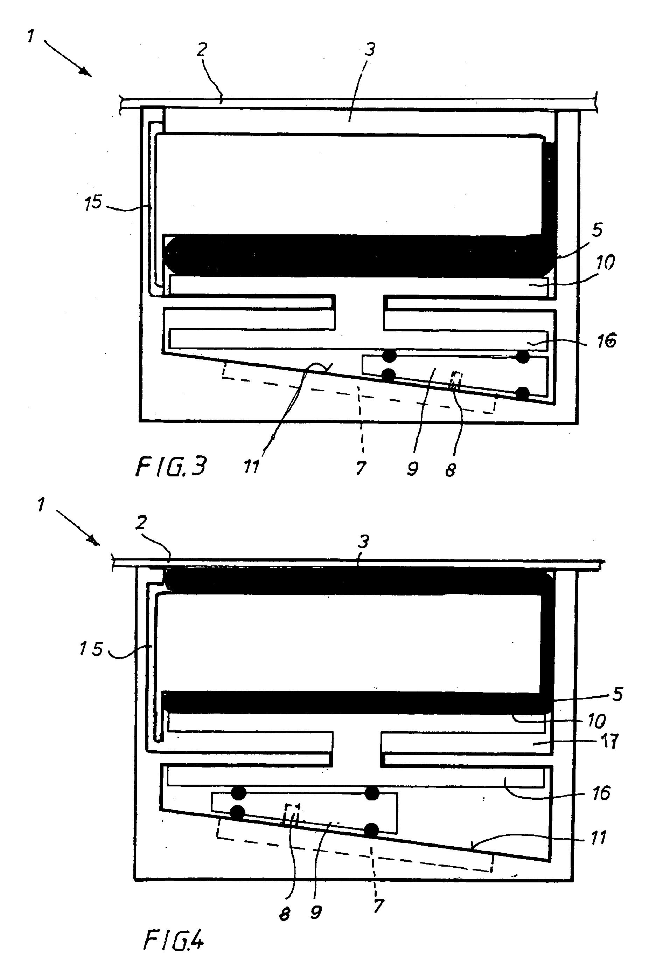

In den Figuren 1 und 2 bewegt sich das Stellglied 8 parallel zur beweglichen Wand 10 und die im spitzen Winkel zur beweglichen Wand 10 verlaufende Gleitfläche 11 ist mit der beweglichen Wand 10 verbunden. Bei dem in den Fig. 3 und 4 dargestellten Ausführungsbeispiel sind in kinematischer Umkehrung die im spitzen Winkel verlaufende Gleitfläche 11 stationär angeordnet und das Stellglied 8 bewegt sich im spitzen Winkel zur beweglichen Wand 10. Ferner ist bei dieser Ausführung der Farbspiegel 3 über einen Kanal 15 mit dem Raum 17 hinter der beweglichen Wand 10 verbunden, so dass beim Füllen des Farbspiegels mit Farbflüssigkeit das aus dem Farbspiegel 3 verdrängte farblose und klar durchsichtige Fluid in den Raum 17 hinter der beweglichen Wand 10 des Farbbehälters 5 gelangt. Dieser Raum 17 wird umso größer, je mehr Farbflüssigkeit in den Farbspiegel 3 gedrückt wird.

Der spitze Winkel zwischen der Ebene des Farbbehälters 5 und der schrägen Fläche 11 ist abhängig von dem Verhältnis des maximalen Verstellweges des Stellgliedes 8 und dem maximalen Hub der beweglichen Wand 10 des Farbbehälters 5. Beträgt beispielsweise der maximale Verstellweg des Stellgliedes 0,4 mm und der maximale Hub der beweglichen Wand 0,1 bis 0,25 mm, dann beträgt der spitze Winkel 15° bis 20°.

Bei den Ausführungsformen der Erfindung nach den Figuren 1 bis 4 muss die bewegliche Wand 10 bei ihrer Hub- und Absenkbewegung so geführt werden, dass sie das Moment aufnimmt, welches vom Stellglied 8 oder vom Schlitten 9 auf die bewegliche Wand 10 ausgeübt wird. Diese Führung kann auch ein Hubteller 16 übernehmen, der mit der beweglichen Wand 10 fest verbunden ist.

Die bewegliche Wand 10 des Farbbehälters 5 kann von einer nicht dargestellten Membran gebildet werden, welche den Farbbehälter 5 verschließt.

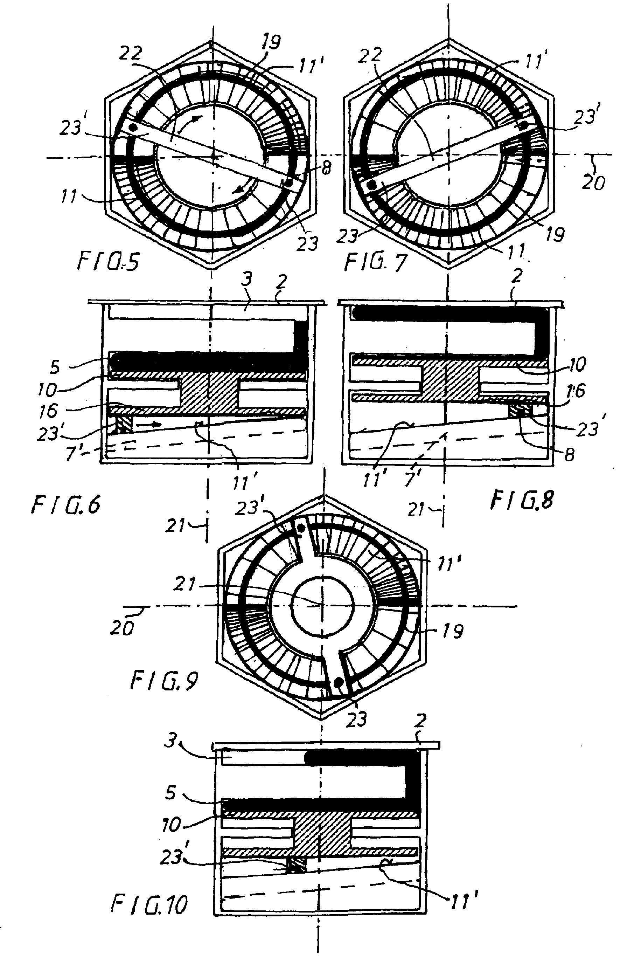

Bei dem Bildpunkt oder Pixel 1 nach den Figuren 5 bis 10 sind symmetrisch zu beiden Seiten einer Mittellinie 20 des Pixels 1 je ein Mikrolinearantrieb 7, 7' und je eine mit dem Stellglied 8 des Linearantriebs 7, 7' zusammenwirkende Gleitfläche 11, 11' angeordnet, die im spitzen Winkel zur Ebene des Farbbehälters 5 verläuft. In den Figuren 5, 7 und 9 befinden sich die Mikrolinearantriebe 7 und 7' unter den schräg verlaufenden Gleitflächen 11 und 11'. Diese Gleitflächen 11, 11' sind im gleichen spitzen Winkel jedoch entgegengesetzt geneigt. Die Linearantriebe 7, 7' und auch die Bewegungsbahn der Stellglieder 8, 8' sind halbkreisförmig mit gleichem Radius um die Mittelachse 21 des Pixels 1 gekrümmt. Die Mikrolinearantriebe 7, 7' und die Bewegungsbahnen 19 der Stellglieder 8 können auch gerade sein. Auf den beiden Gleitflächen 11, 11' gleiten die beiden Enden 23, 23' eines Balkens 22, der um die Mittelachse 21 des Pixels 1 drehbar ist. Weil die Gleitflächen 11, 11' entgegengesetzt geneigt sind, befinden sich die Enden 23, 23' des Balkens 22 stets in gleicher Höhe.
In den Figuren 5 und 6 ist eine Position des Balkens 22 dargestellt, bei der sich die Enden 23, 23' in Nähe der Ausgangsposition befinden und der Balken 22 von den Stellgliedern 8, 8' im Uhrzeigersinn bewegt wird. Im Farbspiegel 3 befindet sich Luft oder eine farblose, durchsichtige Flüssigkeit. Wenn sich der Balken 22 um ca. 140° gedreht hat, ist die in den Figuren 7 und 8 dargestellten Positionen erreicht, bei der sich die beiden Enden 23, 23' des Balkens 22 in Nähe des oberen Endes der Gleitbahnen 11, 11' befinden und der Farbspiegel 3 mit Farbflüssigkeit gefüllt ist. Die Figuren 9 und 10 zeigen eine Position der Brücke 22 und deren Enden 23, 23' bei welcher der Farbspiegel 3 nur zur Hälfte mit Farbflüssigkeit gefüllt ist.

### Bezugszeichenliste

- 1: Pixel
- 2: durchsichtige Wand
- 3: Farbspiegel
- 5: Farbbehälter
- 6: Gasraum
- 7: Mikrolinearantrieb
- 8: Stellglied
- 9: Schlitten
- 10: bewegliche Wand
- 11: schräge Gleitfläche
- 11': schräge Gleitfläche
- 12: keilförmiges Teil
- 13: Raum hinter der beweglichen Wand 10
- 14: Ebene und Gleitfläche parallel zur beweglichen Wand 10
- 15: Kanal
- 16: Hubteller
- 17: Raum hinter der beweglichen Wand 10
- 18: Basis des Pixels 1
- 19: Bewegungsbahn der Mitnehmer 8, 8'
- 20: Mittellinie des Pixels
- 21: Mittelachse
- 22: Balken oder Brücke
- 23: Ende des Balkens oder der Brücke
- 23': Ende des Balkens oder der Brücke

## Patentansprüche

1. Display mit einer Bildfläche, die sich zusammensetzt aus rasterartig angeordneten und elektronisch ansteuerbaren Pixel (1) und bei dem jeder Pixel (1) mindestens einen Farbspiegel (3) aufweist, der von einem flachen Behälter gebildet ist, der zumindest auf der Sichtseite klar durchsichtig ist und dessen Innenraum mit einem Farbbehälter (5) verbunden ist, dessen Inhalt durch elektronische Ansteuerung eines Stellantriebs, der auf eine bewegliche Wand (10) des Farbbehälters (5) einwirkt, so unter Druck gesetzt werden kann, dass aus dem Farbbehälter (5) Farbflüssigkeit in den Farbspiegel (3) gelangt und dabei ein klar durchsichtiges, flüssiges oder gasförmiges Medium verdrängt, das über einen Kanal in einen Gasraum (6) oder einen Raum (17) hinter der beweglichen Wand (10) gelangt und durch Reduzierung des Drucks im Farbbehälter (5) die Farbflüssigkeit aus dem Farbspiegel (3) zurück in den Farbbehälter (5) transportiert wird und das klar durchsichtige flüssige oder gasförmige Fluid in den Farbspiegel (3) gelangt, **wobei** der Farbbehälter (5) flach ist und sich parallel zum Farbspiegel (3) erstreckt und der Stellantrieb von mindestens einem Mikrolinearantrieb (7) gebildet ist, dessen die Verstellung der beweglichen Wand (10) bewirkendes Stellglied sich in einer zur Ebene des Farbbehälters (5) parallelen Ebene bewegt, **dadurch gekennzeichnet, dass** die vom Farbspiegel (3) abgewandte Wand des Farbbehälters (5) zumindest teilweise die bewegliche Wand (10) bildet und die bewegliche Wand (10) über eine im spitzen Winkel zur Ebene des Farbbehälters (5) verlaufende Gleitfläche (11) auf das Stellglied (8) oder einem damit verbundenen Teil (9) abgestützt ist, sodass die Bewegung des Stellgliedes (8) in eine rechtwinklig dazu verlaufende und verkürzte Hub- oder Absenkbewegung der beweglichen Wand (10) umgesetzt wird.

2. Display mit einer Bildfläche, die sich zusammensetzt aus rasterartig angeordneten und elektronisch ansteuerbaren Pixel (1) und bei dem jeder Pixel (1) mindestens einen Farbspiegel (3) aufweist, der von einem flachen Behälter gebildet ist, der zumindest auf der Sichtseite (2) klar durchsichtig ist und dessen Innenraum mit einem Farbbehälter (5) verbunden ist, dessen Inhalt durch elektronische Ansteuerung eines Stellantriebs, der auf eine bewegliche Wand (10) des Farbbehälters (5) einwirkt, so unter Druck gesetzt werden kann, dass aus dem Farbbehälter (5) Farbflüssigkeit in den Farbspiegel (3) gelangt und dabei ein klar durchsichtiges flüssiges oder gasförmiges Medium verdrängt, das über einen Kanal in einen Gasraum (6) oder einen Raum (17) hinter der beweglichen Wand gelangt und durch Reduzierung des Drucks im Farbbehälter (5) die Farbflüssigkeit aus dem Farbspiegel (3) zurück in den Farbbehälter (5) transportiert wird und das klar durchsichtige flüssige oder gasförmige Fluid in den Farbspiegel (3) gelangt, **wobei** der Farbbehälter (5) flach ist und sich parallel zum Farbspiegel (3) erstreckt und der Stellantrieb von mindestens einem Mikrolinearantrieb (7) gebildet ist, **dadurch gekennzeichnet, dass** die vom Farbspiegel (3) abgewandte Wand zumindest teilweise die bewegliche Wand (10) bildet, und das die Verstellung der beweglichen Wand (10) bewirkende Stellglied (8) sich in einer im spitzen Winkel zur Ebene des Farbbehälters (5) verlaufenden Fläche (11) bewegt, und die bewegliche Wand (10) des Farbbehälters (5) sich unmittelbar auf das Stellglied oder auf ein mit dem Stellglied (8) verbundenes Teil (9) abstützt, sodass die Bewegung des Stellgliedes (8) entlang der schrägen Fläche (11) in eine rechtwinklig zur Ebene des Farbbehälters (5) verlaufende und verkürzte Hub- oder Absenkbewegung der beweglichen Wand (10) umgesetzt wird.

3. Display nach Anspruch 1 oder 2 **dadurch gekennzeichnet, dass** das Stellglied (8) des Linearantriebs (7) mit einem Schlitten (9) verbunden ist, auf dem sich die bewegliche Wand (10) des Farbbehälters (5) abstützt und der eine zur Ebene des Farbbehälters (5) parallele Gleitebene und eine zur schrägen Fläche (11) parallele Gleitebene aufweist.

4. Display nach einem der Ansprüche 1 bis 3 **dadurch gekennzeichnet, dass** die bewegliche Wand (10) des Farbbehälters (5) eine Membran ist.

5. Display nach einem der Ansprüche 1 bis 4, **dadurch gekennzeichnet, dass** die bewegliche Wand (10) des Farbbehälters (5) unter der Wirkung einer Rückstellfeder steht.

6. Display nach einem der Ansprüche 1 bis 4, **dadurch gekennzeichnet, dass** die bewegliche Wand (10) elektromagnetisch in die Ausgangsposition rückführbar ist.

7. Display nach einem der Ansprüche 1 bis 6, **dadurch gekennzeichnet, dass** symmetrisch zu beiden Seiten einer Mittellinie (20) des Pixels je ein Linearantrieb (7, 7') und je eine mit dem Stellglied (8) des Linearantriebs (7, 7') zusammenwirkende, im spitzen Winkel zur Ebene des Farbbehälters (5) verlaufende Fläche (11, 11') im gleichen spitzen Winkel, jedoch entgegengesetzt geneigt sind und die Stellglieder (8, 8') der beiden Linearantriebe (7, 7') einen um die Mittelachse (21) des Pixels und des Farbspiegels (3) drehbaren Balken (22) bewegen, dessen beiden Enden (23, 23') auf die beiden geneigten Flächen (11, 11') abgestützt sind und der bei Verdrehen des Balkens (22) um die Mittelachse (21) sich hebt oder absenkt und dabei die bewegliche Wand (10) des Farbbehälters (5) mitnimmt.

8. Display nach Anspruch 7 und Anspruch 3, **dadurch gekennzeichnet, dass** die Enden (23, 23') des Balkens (22) als Schlitten ausgebildet sind mit einer Gleitebene parallel zur Ebene des Farbbehälters (5) und einer Gleitebene parallel zu den schrägen Flächen (11, 11').

9. Display nach Anspruch 7 oder 8, **dadurch gekennzeichnet, dass** die Linearantriebe (7, 7') und die Laufbahn der Stellglieder (8, 8') gerade sind.

10. Display nach Anspruch 7 oder 8, **dadurch gekennzeichnet, dass** die Linearantriebe (7, 7') die Laufbahn der Stellglieder (8, 8') und die schrägen Flächen (11, 11') mit gleichem Radius um die Mittelachse (21) des Pixels gekrümmt sind.

## Claims

1. Display having an Image area composed of electronically controllable pixels (1) arranged in a raster-like pattern, and in which each pixel (1) has at least one colour level (3), which is formed by a flat container, which Is clear and transparent at least on the visible side and whose interior is connected to a colour reservoir (5), whose content may, by electronic control of an actuating drive which acts on a movable wall (10) of the colour reservoir (5), be placed under pressure in such a way that coloured liquid from the colour reservoir (5) reaches the colour level (3), displacing in the process a clear and transparent, liquid or gaseous medium which reaches, via a channel, a gas compartment (6) or a space (17) behind the movable wall (10), and that, by reducing the pressure in the colour reservoir (5), the coloured liquid is transported back into the colour reservoir (5) from the colour level (3) and the clearly transparent liquid or gaseous fluid reaches the colour level (3), wherein the colour reservoir (5) is flat and extends parallel to the colour level (3) and the actuating drive Is formed by at least one micro-linear drive (7), whose actuator which causes the displacement of the movable wall (10) moves In a plane parallel to the plane of the colour reservoir (5), **characterized in that** the wall of the colour reservoir (5) facing away from the colour level (3) at least partially forms the movable wall (10), and the movable wall (10) Is supported via a sliding surface (11), which extends at an acute angle to the plane of the colour reservoir (5), on the actuator (8) or a part (9) connected thereto, so that the movement of the actuator (8) is converted into a shortened lifting or lowering movement, which runs perpendicularly thereto, of the movable wall (10).

2. Display having an image area composed of electronically controllable pixels (1) arranged in a raster-like pattern, and In which each pixel (1) has at least one colour level (3), which is formed by a flat container, which is clearly transparent at least on the visible side (2) and whose interior Is connected to a colour reservoir (5), whose content may, by electronic control of an actuating drive which acts on a movable wall (10) of the colour reservoir (5), be placed under pressure In such a way that coloured liquid from the colour reservoir (5) reaches the colour level (3), displacing in the process a clear and transparent, liquid or gaseous medium which reaches, via a channel, a gas compartment (6) or a space (17) behind the movable wall, and that, by reducing the pressure in the colour reservoir (5), the coloured liquid is transported back into the colour reservoir (5) from the colour level (3) and the clear, transparent liquid or gaseous fluid reaches the colour level (3), wherein the colour reservoir (5) Is flat and extends parallel to the colour level (3) and the actuating drive is formed by at least one micro-linear drive (7), **characterized in that** the wall facing away from the colour level (3) at least partially forms the movable wall (10), and the actuator (8) which causes the displacement of the movable wall (10) moves in a surface (11) extending at an acute angle to the plane of the colour reservoir (5), and the movable wall (10) of the colour reservoir (5) is supported directly on the actuator or on a part (9) connected to the actuator (8) such that the movement of the actuator (8) along the inclined surface (11) is converted into a shortened lifting or lowering movement, which runs perpendicularly to the plane of the colour reservoir (5), of the movable wall (10).

3. Display according to claim 1 or 2, **characterized in that** the actuator (8) of the linear drive (7) is connected to a carriage (9), on which the movable wall (10) of the colour reservoir (5) is supported and which has a sliding plane parallel to the plane of the colour reservoir (5) and a sliding plane parallel to the Inclined surface (11).

4. Display according to one of claims 1 to 3, **characterized in that** the movable wall (10) of the colour reservoir (5) is a diaphragm.

5. Display according to one of claims 1 to 4, **characterized in that** the movable wall (10) of the colour reservoir (5) is under the action of a return spring.

6. Display according to one of claims 1 to 4, **characterized in that** the movable wall (10) may be electromagnetically returned into the starting position.

7. Display according to one of claims 1 to 6, **characterized in that** symmetrically on each of both sides of a centre line (20) of the pixel, a linear drive (7, 7') and a surface (11, 11'), which cooperates with the actuator (8) of the linear drive (7, 7') and extends at an acute angle to the plane of the colour reservoir (5), are inclined at the same acute angle but In opposite directions, and the actuators (8, 8') of the two linear drives (7, 7') move a bar (22) which is rotatable around the centre axis (21) of the pixel and of the colour level (3) and whose two ends (23, 23') are supported on the two inclined surfaces (11, 11') and which is raised or lowered upon rotation of the bar (22) around the centre axis (21) and in the process drags along the movable wall (10) of the colour reservoir (5).

8. Display according to claim 7 and claim 3, **characterized in that** the ends (23, 23') of the bar (22) are designed as carriages having a sliding plane parallel to the plane of the colour reservoir (5) and a sliding plane parallel to the inclined surfaces (11, 11').

9. Display according to claim 7 or 8, **characterized in that** the linear drives (7, 7') and the path of the actuators (8, 8') are linear.

10. Display according to claim 7 or 8, **characterized In that** the linear drives (7, 7'), the path of the actuators (8, 8'), and the inclined surfaces (11, 11') are curved with an equal radius around the centre axis (21) of the pixel.

## Revendications

1. Dispositif d'affichage avec une surface d'image composée de pixels (1) à excitation électronique et disposés en matrice, et dans lequel chaque pixel (1) présente au moins un niveau de colorant (3) formé par un récipient plat qui est clair et transparent au moins du côté visible et dont l'intérieur est relié à un récipient de colorant (5) dont le contenu peut être mis sous pression par un pilotage électronique d'un mécanisme de commande agissant sur une paroi mobile (10) du récipient de colorant (5) de telle sorte qu'un liquide colorant issu du récipient de colorant (5) atteint le niveau de colorant (3) en repoussant un milieu liquide ou gazeux clair et transparent qui atteint par l'intermédiaire d'un canal un espace de gaz (6) ou un espace (17) derrière la paroi mobile (10), et par réduction de la pression dans le récipient de colorant (5), le liquide colorant est ramené du niveau de colorant (3) au récipient de colorant (5) et le fluide liquide ou gazeux clair et transparent atteint le niveau de colorant (3), dans lequel le récipient de colorant (5) est plat et s'étend en parallèle au niveau de colorant (3) et le mécanisme de commande est formé par au moins un micro-entraînement linéaire (7) dont l'actionneur provoquant le réglage de la paroi mobile (10) se déplace dans un plan parallèle au plan du récipient de colorant (5), **caractérisé en ce que** la paroi du récipient de colorant (5), détournée du niveau de colorant (3), forme au moins en partie la paroi mobile (10), et la paroi mobile (10), par l'intermédiaire d'une surface de glissement (11) s'étendant à un angle aigu par rapport au plan du récipient de couleur (5), prend appui sur l'actionneur (8) ou sur une pièce (9) reliée à celui-ci, de sorte que le mouvement de l'actionneur (8) est converti en un mouvement de montée ou de descente de la paroi mobile (10), raccourci et s'étendant perpendiculairement à celui-ci.

2. Dispositif d'affichage avec une surface d'image composée de pixels (1) à excitation électronique et disposés en matrice, et dans lequel chaque pixel (1) présente au moins un niveau de colorant (3) formé par un récipient plat qui est clair et transparent au moins du côté visible (2) et dont l'intérieur est relié à un récipient de colorant (5) dont le contenu peut être mis sous pression par un pilotage électronique d'un mécanisme de commande agissant sur une paroi mobile (10) du récipient de colorant (5) de telle sorte qu'un liquide colorant issu du récipient de colorant (5) atteint le niveau de colorant (3) en repoussant un milieu liquide ou gazeux clair et transparent qui atteint par l'intermédiaire d'un canal un espace de gaz (6) ou un espace (17) derrière la paroi mobile (10), et par réduction de la pression dans le récipient de colorant (5), le liquide colorant est ramené du niveau de colorant (3) au récipient de colorant (5) et le fluide liquide ou gazeux clair et transparent atteint le niveau de colorant (3), dans lequel le récipient de colorant (5) est plat et s'étend en parallèle au niveau de colorant (3) et le mécanisme de commande est formé par au moins un micro-entraînement linéaire (7), **caractérisé en ce que** la paroi détournée du niveau de colorant (3) forme au moins en partie la paroi mobile (10) et l'actionneur (8) provoquant le réglage de la paroi mobile (10) se déplace sur une surface (11) s'étendant à un angle aigu par rapport au plan du récipient de colorant (5), et la paroi mobile (10) du récipient de colorant (5) prend appui directement sur l'actionneur ou sur une pièce (9) reliée à l'actionneur (8), de sorte que le mouvement de l'actionneur (8) le long de la surface inclinée (11) est converti en un mouvement de montée ou de descente de la paroi mobile (10), raccourci et s'étendant perpendiculairement au plan du récipient de colorant (5).

3. Dispositif d'affichage selon la revendication 1 ou 2, **caractérisé en ce que** l'actionneur (8) de l'entraînement linéaire (7) est relié à un chariot (9) sur lequel prend appui la paroi mobile (10) du récipient de colorant (5) et qui présente un plan de glissement parallèle au plan du récipient de colorant (5) et un plan de glissement parallèle à une surface inclinée (11).

4. Dispositif d'affichage selon l'une quelconque des revendications 1 à 3, **caractérisé en ce que** la paroi mobile (10) du récipient de colorant (5) est une membrane.

5. Dispositif d'affichage selon l'une quelconque des revendications 1 à 4, **caractérisé en ce que** la paroi mobile (10) du récipient de colorant (5) subit l'effet d'un ressort de rappel.

6. Dispositif d'affichage selon l'une quelconque des revendications 1 à 4, **caractérisé en ce que** la paroi mobile (10) peut être ramenée de manière électromagnétique à la position de départ.

7. Dispositif d'affichage selon l'une quelconque des revendications 1 à 6, **caractérisé en ce que** de manière symétrique par rapport aux deux côtés d'une ligne médiane (20) du pixel, respectivement un entraînement linéaire (7, 7') et respectivement une surface (11, 11') coopérant avec l'actionneur (8) de l'entraînement linéaire (7, 7') et s'étendant à un angle aigu par rapport au plan du récipient de colorant (5), sont inclinés sous le même angle aigu, mais à l'opposé, et les actionneurs (8, 8') des deux entraînements linéaires (7, 7') déplacent une barre (22) pivotante autour de l'axe central (21) du pixel et du niveau de colorant (3), barre dont les deux extrémités (23, 23') prennent appui sur les deux surfaces inclinées (11, 11') et qui monte ou descend en cas de torsion de la barre (22) autour de l'axe central (21) entraînant alors la paroi mobile (10) du récipient de colorant (5).

8. Dispositif d'affichage selon les revendications 7 et 3, **caractérisé en ce que** les extrémités (23, 23') de la barre (22) sont réalisées sous forme de chariots, avec un plan de glissement parallèle au plan du récipient de colorant (5) et un plan de glissement parallèle aux surfaces inclinées (11, 11').

9. Dispositif d'affichage selon la revendication 7 ou 8, **caractérisé en ce que** les entraînements linéaires (7, 7') et la vole de roulement des actionneurs (8, 8') sont rectilignes.

10. Dispositif d'affichage selon la revendication 7 ou 8, **caractérisé en ce que** les entraînements linéaires (7, 7'), la voie de roulement des actionneurs (8, 8') et les surfaces inclinées (11, 11') sont courbés avec un rayon Identique autour de l'axe central (21) du pixel.
